# EUROPEAN PATENT APPLICATION

(11) **EP 0 842 996 A1**
(43) Date of publication of application: **20.05.1998**
(21) Application number: 97309201.8
(22) Date of filing: 14.11.1997
(51) Int. Cl.: C09J 7/02, C08F 290/06, C09D 163/00

(54) **Solventless silicone release coatings**

(30) Priority: 14.11.1996 JP 318674/96
(71) Applicant: Dow Corning Toray Silicone Company, Ltd., Tokyo, 100 (JP)
(72) Inventor: Manzoji, Ryuko, Dow Corning Tor.Silic.Com Ltd., Ichihara-shi, Chiba Prefecture (JP)
(74) Representative: Hall, Marina

(57) **Abstract**

This specification claims solventless silicone release coating composition comprising (A) 100 weight parts of silicone-grafted alicyclic epoxy-functional vinyl copolymer obtained by a method comprising (I) copolymerizing a mixture of (a) 1 to 80 weight% of a silicone macromonomer free of alicyclic epoxy groups and having a vinyl-polymerizable group at a single molecular chain terminal, (b) 5 to 90 weight% of a monomer containing at least 1 alicyclic epoxy group and one vinyl polymerizable group, (c) up to 94 weight% of vinyl-polymerizable monomer except (a) nd (b), (d) optionally a polymerization initiator, and (e) optionally at least one solvent, (B) 120 to 10,000 weight parts of at least one silicone compound containing at least 1 alicyclic epoxy group, and (C) 0.1 to 20 weight parts per 100 weight parts of the total of components (A) and (B) of an onium salt photocuring catalyst. The solventless silicone release coating compositions of this invention, upon exposure to ultraviolet radiation, cure into a highly paintable release film that is strongly adherent to a variety of substrates.

## Description

This invention relates to solventless silicone release coating compositions. More particularly, this invention relates to a solventless silicone release coating composition which upon exposure to ultraviolet radiation cures into a highly paintable release film that is strongly adherent to a variety of substrates.

Radiation curable solventless silicone release coating compositions comprising an epoxy-functional organopolysiloxane and an onium salt curing catalyst have been disclosed in JP-A 56-38350 (38,350/1981). Since these compositions do not use an organic solvent and cure upon exposure to ultraviolet light, they offer the advantages of excellent environmental cleanliness, good fire safety, and good energy conservation. However, epoxy-functional organopolysiloxanes are not very compatible with onium salt curing catalysts which creates a pronounced tendency for the cure of the applied film to be inadequate. As a result, large doses of ultraviolet light are required in order to cure the film to a level that provides an acceptable release performance. Even when such a cure is effected, there is a strong tendency for the resulting release characteristics to be nonuniform or uneven, which in turn can lead to yet another problem in the form of contamination of the pressure-sensitive adhesive layer and a decline in its adhesiveness. In addition, compositions of this type also exhibit the same crawling or cissing by oil-based inks that is exhibited by ordinary silicone release agents, which results in poor printing and writing characteristics.

JP-A 4-323284 (323,284/1992) discloses a composition comprising an epoxy- and polyether-functional organopolysiloxane, 3,4-epoxycyclohexylmethyl 3',4'-epoxycyclohexylcarboxylate, a silicone graft copolymer which was prepared from a silicone macromonomer and a radically polymerizable monomer, and an onium salt curing catalyst. This composition does exhibit an excellent paintability, but it also suffers from a poor curability and its release resistance values are hard to control or adjust.

This invention relates to a solventless silicone release coating composition comprising (A) 100 weight parts of a silicone grafted epoxy-functional vinyl copolymer obtained by a method comprising (I) copolymerizing (a) a silicone macromonomer free of alicyclic epoxy groups and having a vinyl-polymerizable group at a single molecular chain terminal , (b) a monomer containing at least 1 alicyclic epoxy group and at least one vinyl polymerizable group, and (c) vinyl-polymerizable monomer except (a) and (b), (B) 120 to 10,000 weight parts of at least one silicone compound containing at least 1 alicyclic epoxy group, and (C) 0.1 to 20 weight parts per 100 weight parts of the total of components (A) and (B) of an onium salt photocuring catalyst.

It is an object of this invention to provide a solventless silicone release coating composition which, upon exposure to ultraviolet radiation, cures into a highly paintable release film that is strongly adherent to a variety of substrates.

This invention relates to a solventless silicone release coating composition comprising (A) 100 weight parts of a silicone-grafted alicyclic epoxy-functional vinyl copolymer obtained by a method comprising copolymerizing a mixture comprising (a) 1 to 80 weight% of a silicone macromonomer free of alicyclic epoxy groups and having a vinyl-polymerizable group at a single molecular chain terminal, (b) 5 to 90 weight% of a monomer having at least 1 alicyclic epoxy group and one vinyl polymerizable group, and (c) up to 94 weight% of vinyl-polymerizable monomer except (a) and (b), (B) 120 to 10,000 weight parts of at least one silicone compound having at least 1 alicyclic epoxy group, and (C) 0.1 to 20 weight parts per 100 weight parts of the total of components (A) and (B) of an onium salt photocuring catalyst.

Component (a) is preferably a diorganopolysiloxane free of alicyclic epoxy groups having a vinyl-polymerizable group at a single molecular chain terminal, wherein the vinyl-polymerizable group is exemplified by acryloxy, methacryloxy, acrylamide, methacrylamide, vinylphenyl, and vinyl. The diorganopolysiloxane of (a) preferably has a number-average molecular weight from 500 to 50,000 and more preferably from 1,000 to 20,000. The silicon-bonded groups on (a), other than the vinyl-polymerizable group, are exemplified by alkyl groups such as methyl, ethyl, and propyl, and by aryl groups such as phenyl. When this component also contains a diorganopolysiloxane that is vinyl-polymerizable at both terminals, problems will occur during copolymerization such as gelation and/or an increase in the viscosity. The admixture in this component of a diorganopolysiloxane that is nonfunctional at both terminals creates the risk of bleed-out from the ultimately obtained cured film. These considerations make it highly desirable for the vinyl-polymerizable silicone macromonomer in this component to be very pure. The vinyl-polymerizable silicone macromonomer (a) can be prepared, for example, by the nonequilibration ring-opening polymerization of cyclic trisiloxane followed by addition of and reaction with a vinyl-polymerizable group-functional dimethylchlorosilane. A high-purity vinyl-polymerizable silicone macromonomer can be prepared by this method by running a nonequilibration ring-opening polymerization in the presence of a nitrile or ester compound and a polar solvent such as tetrahydrofuran or dimethylformamide such as is disclosed in JP-A 6-113951 (113,951/1994).

Component (a) is preferably selected from the group consisting of 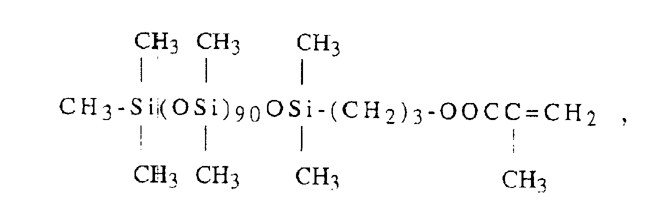 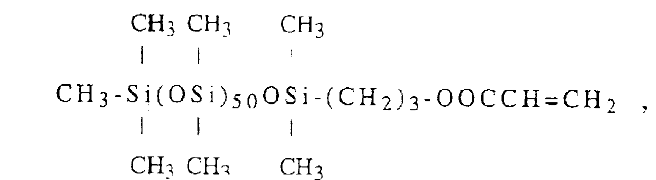 and

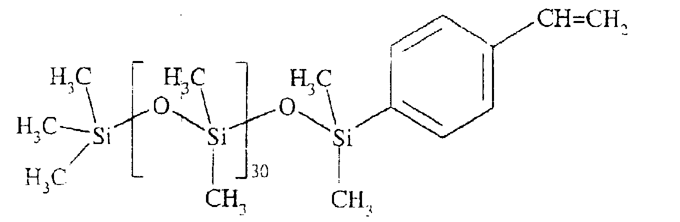

The alicyclic epoxy group of (b) is exemplified by 3,4-epoxycyclohexyl and 4-methyl-3,4-epoxycyclohexyl and the vinyl-polymerizable group of (b) is exemplified by acryloxy, methacryloxy, acrylamide, methacrylamide, vinylphenyl, and vinyl. Component (b) is exemplified by monomers having the general formula: 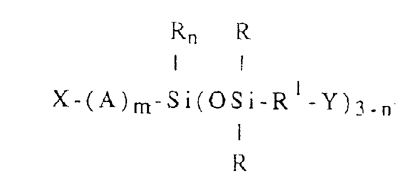 wherein X is a vinyl-polymerizable group as described above, Y is an alicyclic epoxy group as described above, each R is independently selected from monovalent hydrocarbon groups free of aliphatic unsaturation exemplified by alkyl groups such as methyl, ethyl, butyl, pentyl, and hexyl, aryl groups such as phenyl, tolyl, and xylyl, and aralkyl groups such as benzyl and phenethyl, R¹ is a divalent hydrocarbon group having at least 2 carbon atoms exemplified by alkylene groups such as ethylene, propylene, butylene, and hexylene, and arylene groups such as phenylene, A is selected from a divalent hydrocarbon group having at least 2 carbon atoms or a group having the formula -R²-O-R²- wherein each R² is independently selected from divalent hydrocarbon groups as described above, m has a value of 0 or 1, and n is an integer from 0 to 2.
The group A is exemplified by ethylene, propylene, butylene, hexylene, and ethyleneoxypropylene.

The monomer of (b) can be synthesized, for example, by an addition reaction between a siloxane having the formula 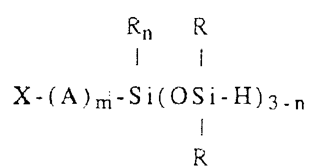 wherein R, A, X, m, and n are as defined as above and an aliphatically unsaturated alicyclic epoxy compound.

Component (b) is preferably selected from the group consisting of 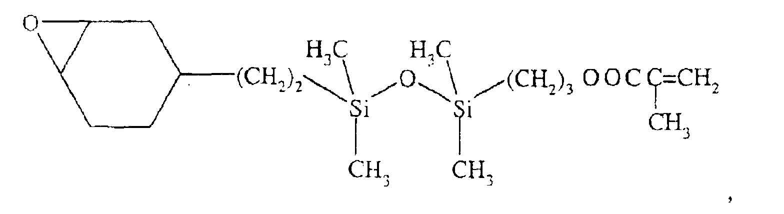 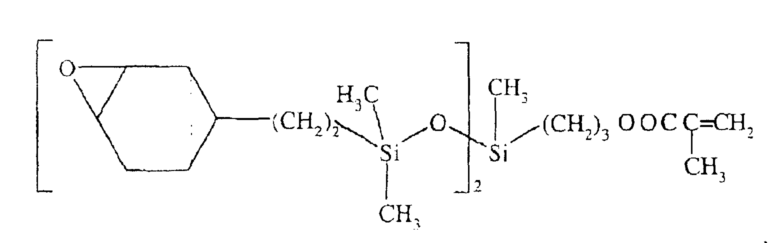 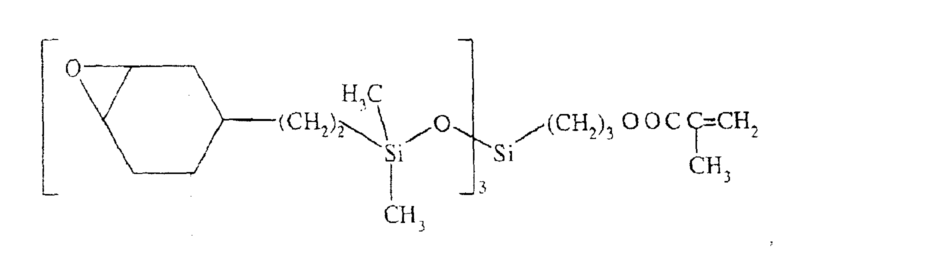 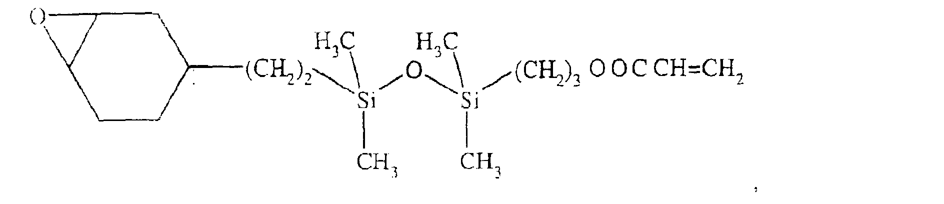 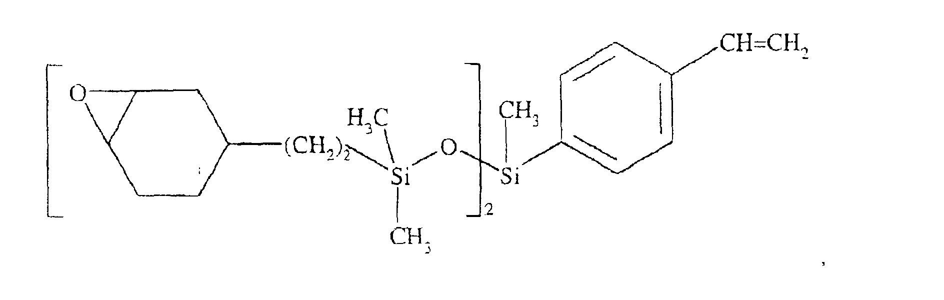 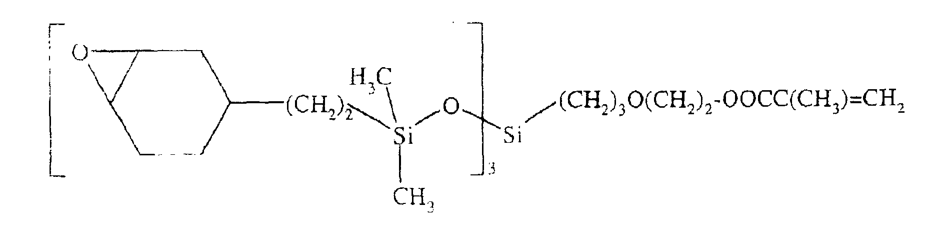 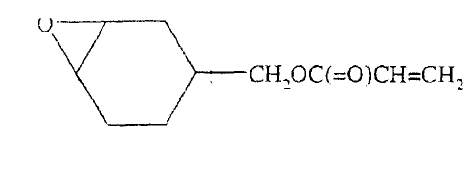 and

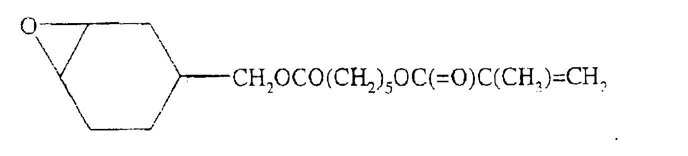

Component (c) is vinyl-polymerizable monomer except (a) and (b) which is preferably selected from the group consisting of acrylate esters, methacrylate esters, styrene, acrylic acid, methacrylic acid, vinyl acetate, vinylidene chloride, and polyalkylene glycol monomethacrylates. The acrylate esters are exemplified by methyl acrylate, ethyl acrylate, propyl acrylate, and butyl acrylate, and the methacrylate esters are exemplified by methyl methacrylate, ethyl methacrylate, propyl methacrylate, and butyl methacrylate. The carboxylic acid esters may be used individually or as combinations of two or more selections. Acrylate esters and methacrylate esters are preferred. The higher esters of acrylic acid (for example, butyl acrylate), which function to improve the adherence of the coating to the substrate by reducing the glass transition temperature of the graft copolymer (A), are particularly preferred.

Preferably component (a) is present in an amount from 3 to 70 weight%, component (b) is present in an amount from 10 to 80 weight%, and component (c) is present in an amount from 0 to 87 weight%. With regard to component (a), the ultimately obtained cured film suffers from a reduced releasability if component (a) is below 1 weight% and suffers from a reduced mechanical strength above 80 weight%. With regard to the component (b), curability is diminished if component (b) is below 5 weight% and causes a reduced releasability by the ultimately obtained cured film if (b) is in excess of 90 weight%.

Well-known copolymerization methods can be used to prepare component (A) such as radical polymerization, anionic polymerization, and group-transfer polymerization. Radical polymerization is preferred for its ease of execution. Suitable radical polymerization initiators are exemplified by azo compounds such as azobisisobutyronitrile and by peroxides such as benzoyl peroxide and dicumyl peroxide. The polymerization technique is exemplified by solution, emulsion, suspension, and bulk polymerization techniques. The preferred technique is solution polymerization, in which components (a) and (b) or (a) to (c) can be dissolved to homogeneity and polymerized in a homogeneous system. The solvent used for this purpose will vary depending on the nature of component (c) and amount of ratio of component (a), (b), and (c), but can be generally exemplified by aromatic hydrocarbons such as benzene, toluene, xylene, and the like; ketones such as methyl ethyl ketone and methyl isobutyl ketone, esters such as ethyl acetate and butyl acetate, and ethers such as tetrahydrofuran, dioxane, and diethyl ether. The solvent can also be a combination of 2 or more of the solvents described above.

Component (B), the silicone compound containing at least 1 alicyclic epoxy group, is a reactive diluent whose purpose is to impart fluidity to the composition of this invention. Component (B) is preferably an organosiloxane having a viscosity from 1 to 30,000 centipoise at 25°C. The silicon-bonded groups other than the alicyclic epoxy groups are preferably monovalent hydrocarbon groups exemplified by alkyl groups such as methyl, ethyl, or propyl, and aryl groups such as phenyl. Component (B) is preferably selected from the group consisting of 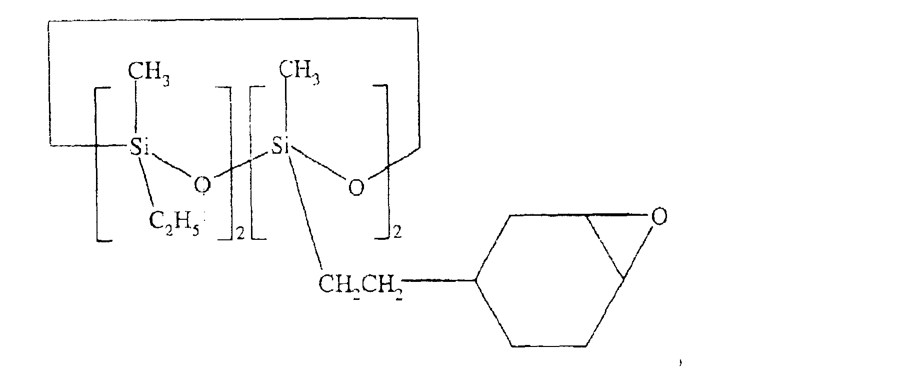 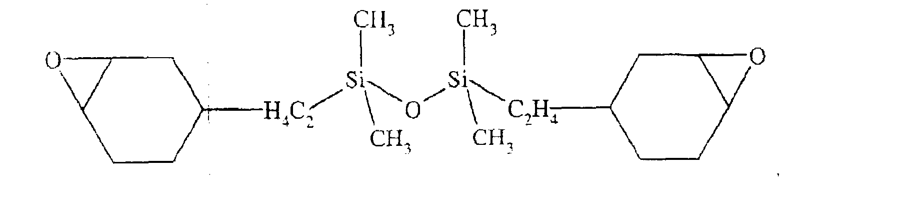 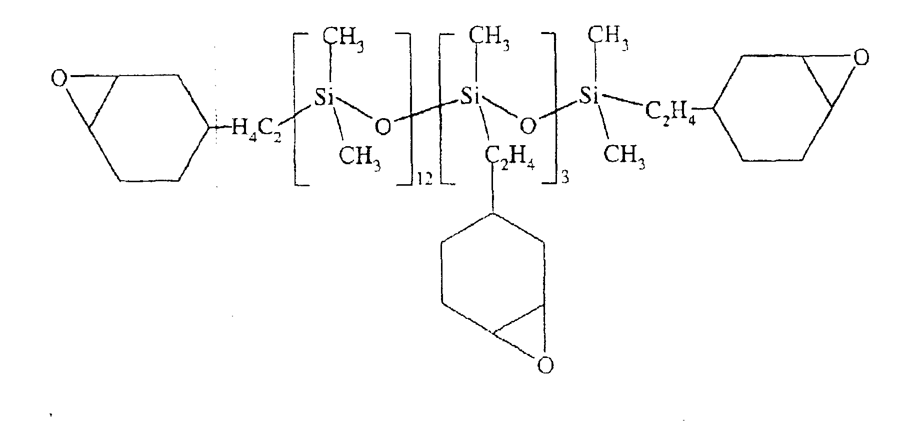 and

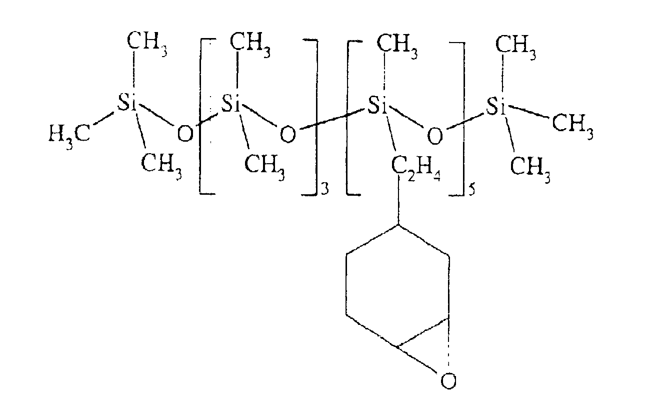

The alicyclic epoxy-functional silicone compounds of (B) may be employed alone or may be a combination of two or more alicyclic epoxy-functional silicone compounds. The alicyclic epoxy content in these compounds is preferably at least 20 weight% and particularly preferably is at least 40 weight%. Component (B) is added at from 120 to 10,000 weight parts, preferably at from 150 to 2,000, and particularly preferably at from 200 to 1,000 weight parts, in each case per 100 weight parts component (A).

The onium salt photocuring catalyst of component (C) functions to induce curing of the composition of this invention. Component (C) is exemplified by diazonium salts having the formula ArN₂⁺Z⁻ wherein Ar is an aryl group and Z is a nonbasic, non-nucleophilic anion such as BF₄, PF_{6,} AsF₆, SbF₆, SbCl₆, HSO₄, and ClO₄; sulfonium salts having the formula R³₃S⁺Z⁻ wherein R³ is alkyl or aryl and Z is defined as above; and iodonium salts R³₂I⁺Z⁻ wherein R³ and Z are defined as above. This component is present in an amount from 0.1 to 20 weight parts and preferably at from 1 to 10 weight parts, in each case per 100 weight parts of the total of components (A) and (B). The compositions of this invention suffer from a reduced curability at additions below 0.1 weight part, while additions in excess of 20 weight parts can lead to a reduced releasability by the ultimately obtained cured film.

The compositions of this invention are prepared by mixing the above-described components (A) to (C) to homogeneity. The composition according to the present invention preferably has a viscosity at 25°C of from 10 to 100,000 centipoise and it is highly preferred that the composition have a viscosity of 100 to 50,000 centipoise at 25°C. Mixing is preferably effected by first dissolving the components in the necessary amount of organic solvent, thereafter mixing, and subsequently removing the solvent.

Although lacking an organic solvent such as xylene or hexane which are typically used in conventional silicone release coating compositions, the compositions of this invention nevertheless form a fluid as a result of the presence of the alicyclic epoxy-functional silicone compound (B) which functions as a reactive diluent. As a consequence, the composition exhibits an excellent processability, but in addition accrues the advantage that its viscosity can be easily adjusted by varying the addition of component (B). Moreover, since both components (A) and (B) in the compositions of this invention contain the highly reactive alicyclic epoxy group, they crosslink upon exposure to UV light in the presence of component (C) to form a cured coating or film that is highly adherent and has excellent paintability, printability/writability, and releasability. The compositions of this invention are therefore well-qualified for application as a coating on paper and goods that must exhibit releasability. For purposes of this invention, paintability denotes the absence of crawling by paint or ink and its retention on the application surface when paint is applied thereto or characters are written thereon with an ink pen. A light source such as a high-pressure mercury lamp or metal halide lamp is typically used as the source of UV irradiation. The substrates are exemplified by paper and a variety of plastic films. The application technique can be those application techniques heretofore used with silicone release agents, for example, an apparatus such as a bar coater can be used to apply the composition according to the present invention at a rate of 0.1 to 10 g/m².

### Examples

The present invention will be explained in greater detail below through working examples, in which parts indicates weight parts. The composition viscosity and the release resistance, residual adhesiveness, and paintability of the cured films were measured using the following methods.

The viscosity mentioned herein was measured at 25°C using a digital viscometer (DVU-E2 from Toki Sangyo Kabushiki Kaisha).

The release resistance of the compositions of this invention were measured in the following manner: the solventless silicone release coating composition was coated on the polyethylene surface of polyethylene-laminated paper and the composition was then cured. A commercial pressure-sensitive adhesive tape having a width of 38 mm (31B from Nitto Denko Kabushiki Kaisha) was pressed, using one back-and-forth excursion with a 2-kg tape roller onto the cured composition. This assembly was then held for 20 hours at 70°C with a load of 20 g/cm² on the pressure-sensitive adhesive tape. After this holding period, the load was removed and the sample was cooled at room temperature for hours. Using a Tensilon, the pressure-sensitive adhesive tape was then peeled at 180° at a rate of 300 mm/minute and the force required for separation was measured (g/38 mm) and was reported as the peel resistance value.

The residual adhesiveness of the compositions were measured in the following manner: the separated pressure-sensitive tape afforded by measurement of the release resistance was folded in two and the degree of adhesion between the two halves was measured. A score of "+ +" was assigned when this adhesion was unchanged from its original level; a score of "+" was assigned when this adhesion was somewhat lower than the original level; and a score of "x" was assigned when there was almost no adhesion.

To evaluate the paintability, characters were written using a commercial oil-based ink pen on the polyethylene surface of polyethylene-laminated paper after applicaton thereto of the solventless silicone release coating and curing of the composition. A score of "+ +" was rendered when the characters could be written with absolutely no crawling of the oil-based ink.

### Examples

### Reference Example 1

About 150 parts of toluene was placed in a 100-mL flask equipped with a stirrer, thermometer, condenser, and nitrogen inlet tube and the dissolved oxygen in the reaction system was purged with nitrogen. Into this were then introduced 60 parts butyl acrylate, 20 parts 1-(3',4'-epoxycyclohexyl)ethyl-3-methacryloxypropyltetramethyldisiloxane, 20 parts of a silicone macromonomer having the average formula 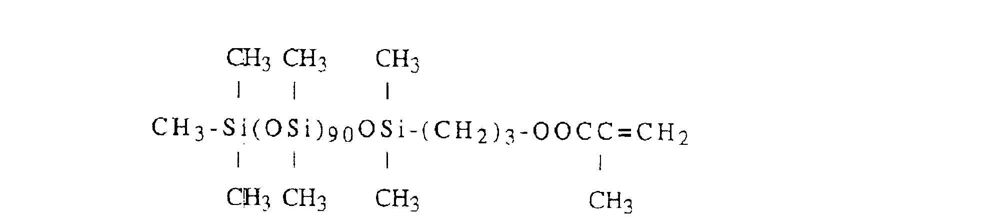 and 2 parts azobisisobutyronitrile and the dissolved oxygen in the reaction system was again purged with nitrogen. The mixture was then stirred under nitrogen for 24 hours while heating to 60°C to yield a toluene solution of a silicone-grafted alicyclic epoxy-functional vinyl copolymer. Analysis of this toluene solution by GPC confirmed the almost complete disappearance of the starting material peaks. Elimination of the toluene and unreacted butyl acrylate from this toluene solution by heating at reduced pressure yielded a semi-solid silicone-grafted alicyclic epoxy-functional vinyl copolymer.

### Examples 1 to 9

Solventless silicone release coating compositions were then prepared by mixing to homogeneity 2.0 parts of an onium salt photocuring catalyst, an alicyclic epoxy-functional silicone compound selected from the following 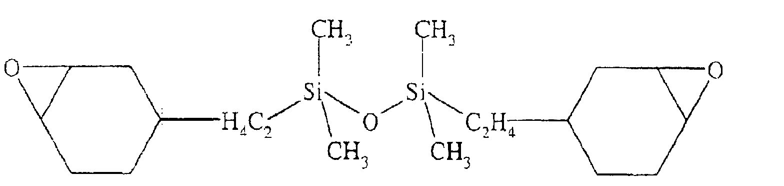 denoted component (B-1) and having a viscosity of 40 centipoise at 25°C, 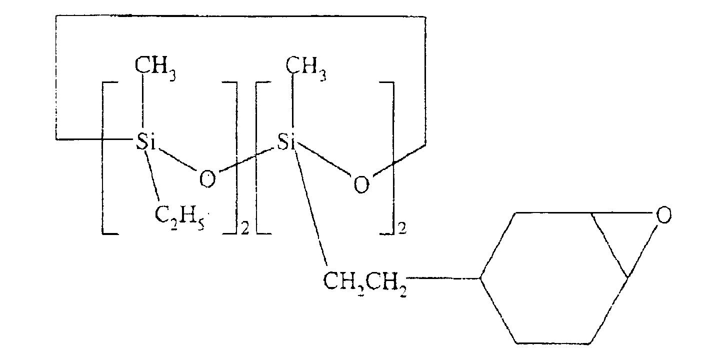 denoted component (B-2) and having a viscosity of 120 centipoise at 25°C 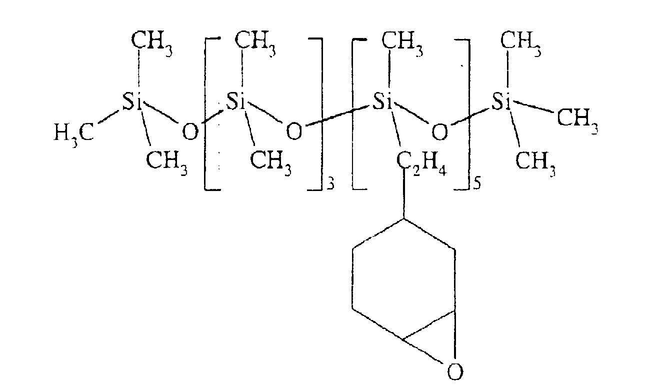 denoted component (B-3) and having a viscosity of 740 centipoise at 25 °C, and the silicone-grafted alicyclic epoxy-functional vinyl copolymer (denoted component (A)) prepared above in Reference Example I. The amounts of component (A) and components (B-1), (B-2), or (B-3) are reported in Table 1. The viscosity of the resulting solventless silicone release coating compositions was measured and the results are reported in Table I. The compositions were also coated on the polyethylene surface of polyethylene-laminated paper using a bar coater to give a solids coating weight of 1.0 g/m². After the coating operation, the samples were first held in a 50°C oven for 30 seconds and curing was thereafter effected by exposing the coated surface using an ultraviolet exposure device provided with a high-pressure mercury lamp (at 130 mJ/cm²). The release resistance, residual adhesiveness, and paintability of the resulting cured films were measured, and these results are reported in Table 1.

### Comparative Example 1

A semisolid alicyclic epoxy-functional copolymer (component (A')) was prepared using the procedure described in Reference Example 1, but in the present case without the addition of the silicone macromonomer that was used in Reference Example 1. A solventless silicone release coating composition was then prepared by mixing the following to homogeneity: 26.4 parts of the alicyclic epoxy-functional copolymer (component (A'). 6.6 parts of a dimethylpolysiloxane having the average formula 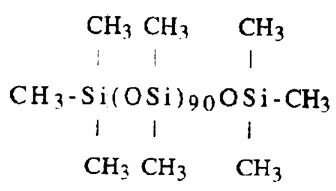 2.0 parts of an onium salt photocuring catalyst, and 67 parts of an alicyclic epoxy-functional silicone compound (component (B-2)) having the following average structure : 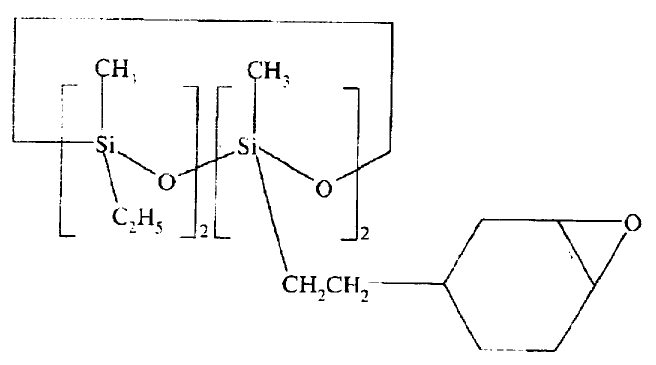 The viscosity of the resulting solventless silicone release coating composition, and the release resistance, residual adhesiveness, and coatability of the cured film were measured as in Example 1, and these results are reported in Table 1.

### Comparative Example 2

A solventless silicone release coating composition was prepared as in Example 1, but in this case omitting the silicone-grafted, alicyclic epoxy-functional vinyl copolymer (component (A)) used in Example 1 while adding 100 parts of the alicyclic epoxy-functional silicone compound (component (B-1)) having the following average structure: 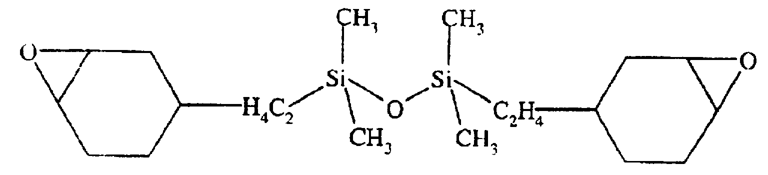 The viscosity of the resulting solventless silicone release coating composition, and the release resistance, residual adhesiveness, and paintability of the cured film were measured as in Example 1, and these results are reported in Table 1.

### Comparative Example 3

A solventless silicone release coating composition was prepared as in Example 4, but in this case omitting the silicone-grafted alicyclic epoxy-functional vinyl copolymer (component (A)) used in Example 4 while adding 100 parts of the alicyclic epoxy-functional silicone compound (component (B-2)) having the following average structure:

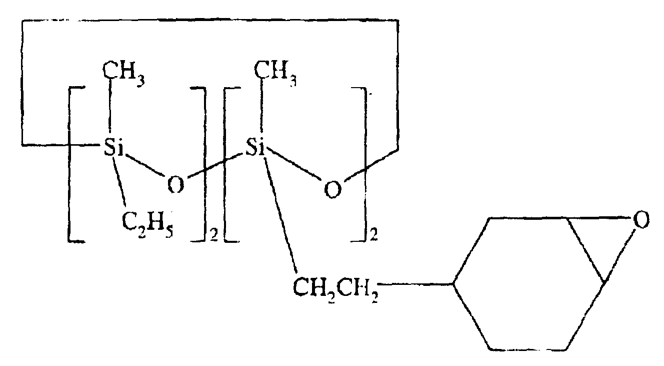

The viscosity of this solventless silicone release coating composition. and the release resistance, residual adhesiveness, and paintability of the cured film were measured as in Example 4, and these results are reported in Table 1.

### Comparative Example 4

A solventless silicone release coating composition was prepared as in Example 7, but in this case omitting the silicone-grafted alicyclic epoxy-functional vinyl copolymer (component (A)) used in Example 7 while adding 100 parts of the alicyclic epoxy-functional silicone compound (component (B-3)) having the following average structure: 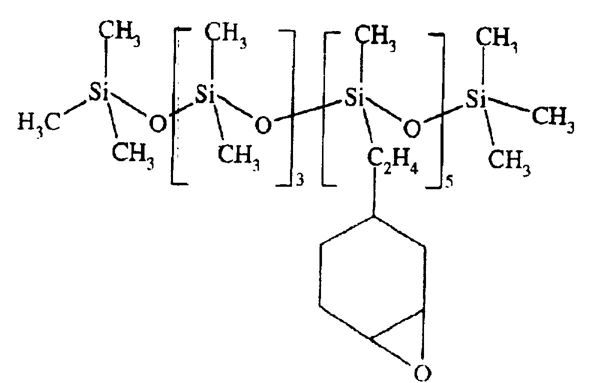 The viscosity of this solventless silicone release coating composition, and the release resistance, residual adhesiveness, and paintability of the cured film were measured as in Example 7, and these results are reported in Table 1.

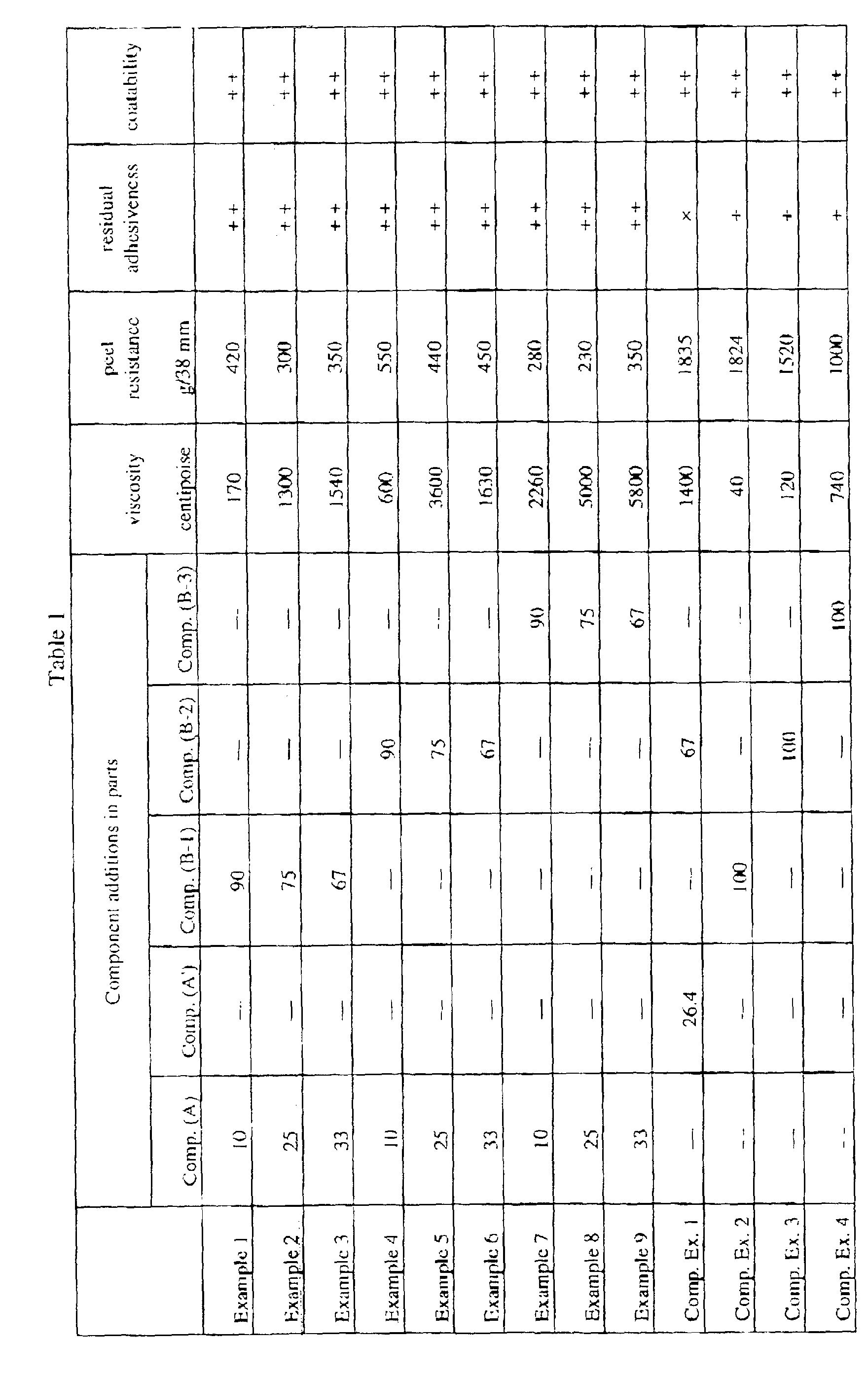

## Claims

1. A solventless silicone release coating composition comprising
(A) 100 weight parts of a silicone-grafted alicyclic epoxy-functional vinyl copolymer obtainable by a method comprising:
(I) copolymerizing a mixture comprising:
(a) 1 to 80 weight% of a silicone macromonomer free of alicyclic epoxy groups and having a vinyl-polymerizable group at a single molecular chain terminal,
(b) 5 to 90 weight% of a monomer having at least 1 alicyclic epoxy group and one vinyl polymerizable group,
(c) up to 94 weight% of vinyl-polymerizable monomer except (a) and (b);
(d) optionally a polymerization initiator, and
(e) optionally at least one solvent;
(B) 120 to 10,000 weight parts of at least one silicone compound having at least 1 alicyclic epoxy group; and
(C) 0.1 to 20 weight parts per 100 weight parts of the total of components (A) and (B) of an onium salt photocuring catalyst.

2. A composition according to Claim 1, wherein (a) is selected from the group consisting of 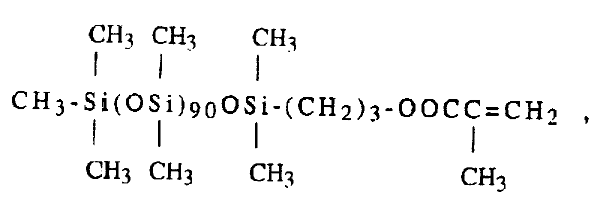 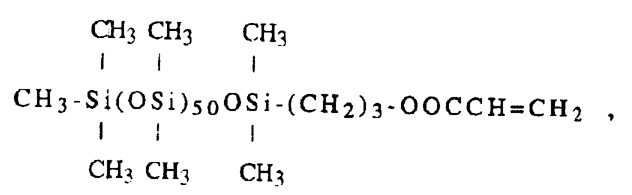 and

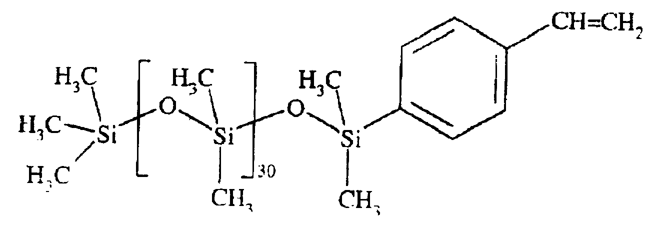

3. A composition according to Claim 1, wherein Component (b) is a compound having the general formula: 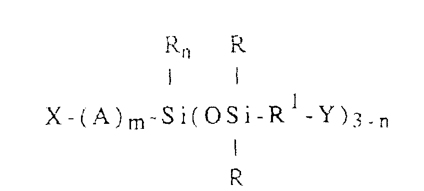 wherein X is selected from the group consisting of acryloxy, methacryloxy, acrylamide, methacrylamide, vinylphenyl, and vinyl; Y is selected from 3,4-epoxycyclohexyl or 4-methyl-3,4-epoxycyclohexyl; each R is selected from the group consisting of alkyl groups, aryl groups, and aralkyl groups; R¹ is a divalent hydrocarbon group having at least 2 carbon atoms and A is selected from a divalent hydrocarbon group having at least 2 carbon atoms or a group having the formula -R²-O-R²-, wherein each R² is a divalent hydrocarbon group having at least 2 carbon atoms, m has a value of 0 or 1, and n is an integer from 0 to 2.

4. A composition according to Claim 1, wherein (b) is selected from the group consisting of 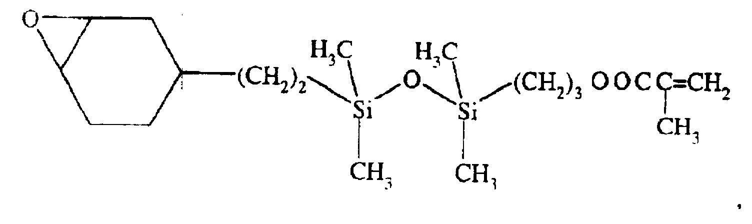 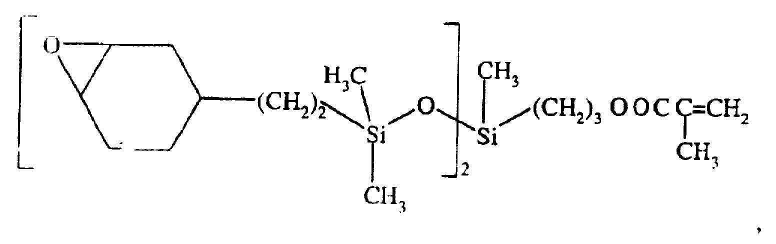 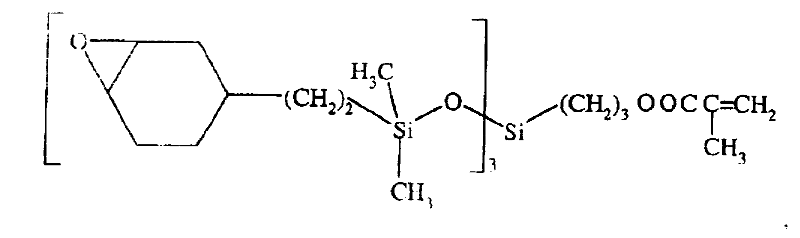 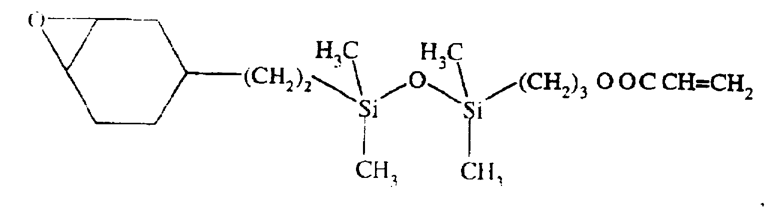 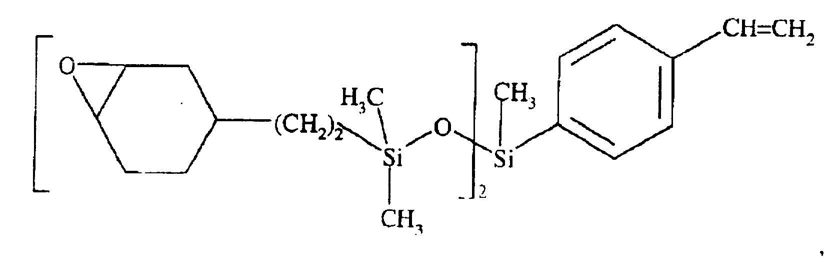 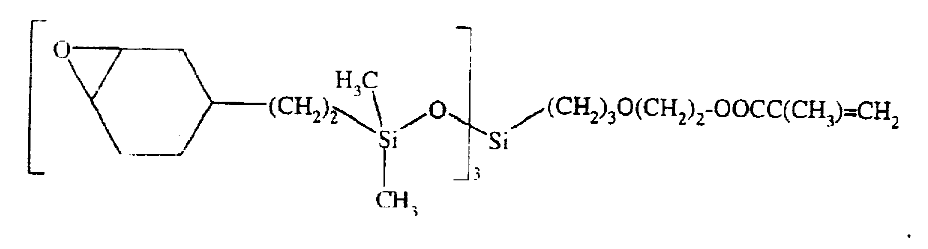 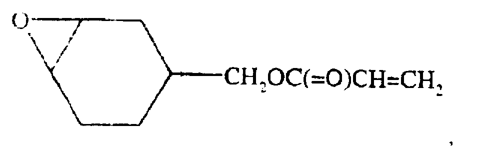 and

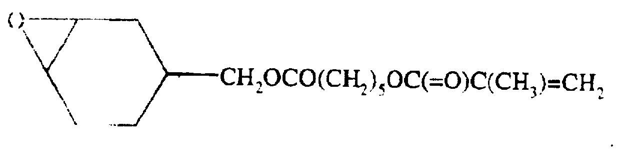

5. A composition according to Claim 1, wherein (c) is selected from the group consisting of acrylate esters, methacrylate esters, styrene, acrylic acid, methacrylic acid, vinyl acetate, vinylidene chloride, and polyalkylene glycol monomethacrylates.

6. A composition according to Claim 1, wherein (d) is selected from the group consisting of azobisisobutyronitrile, benzoyl peroxide, and dicumyl peroxide.

7. A composition according to Claim 1, wherein (e) is selected from the group consisting of benzene, toluene, xylene, methyl ethyl ketone, methyl isobutyl ketone, ethyl acetate, butyl acetate, tetrahydrofuran, dioxane, and diethyl ether.

8. A composition according to Claim 1, wherein (B) is selected from the group consisting of 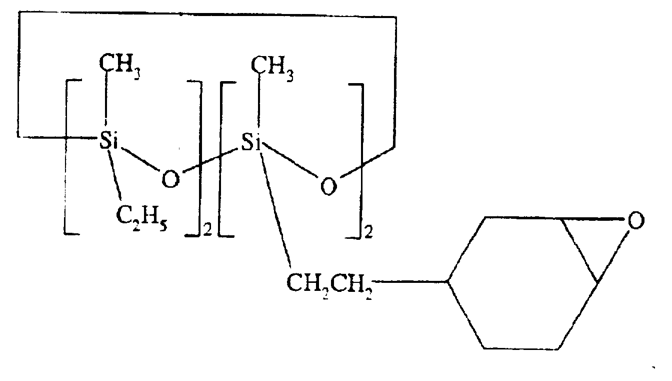 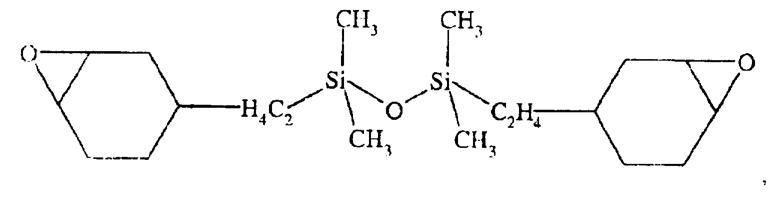 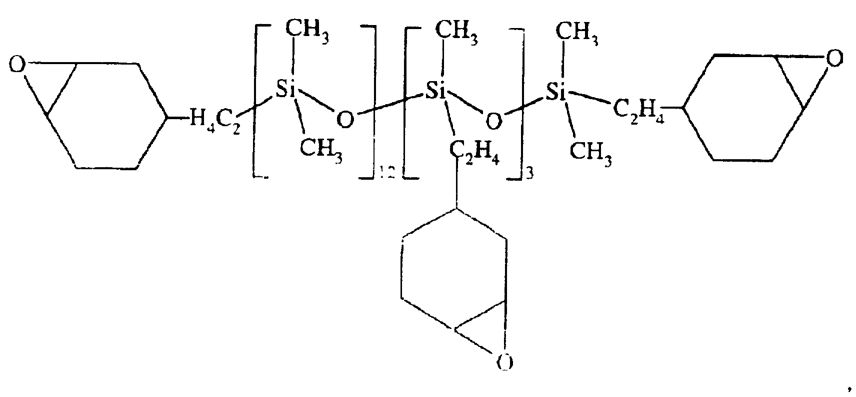 and

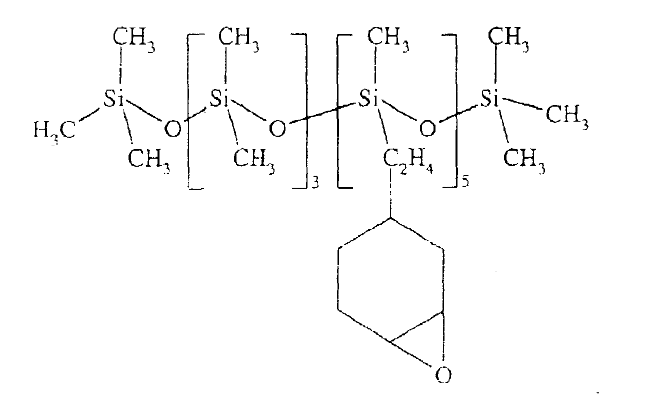

9. A composition according to Claim 1, wherein (C) is selected from the group consisting of
(i) diazonium salts having the formula ArN₂⁺Z⁻ ;
(ii) sulfonium salts having the formula R³₃S⁺Z⁻ ; and
(iii) iodonium salts R³₂l⁺Z⁻
wherein Ar is an aryl group, Z is a nonbasic, non-nucleophilic anion, and R³ is selected from alkyl or aryl groups.

10. A composition according to Claim 9, wherein Z is selected from the group consisung of BF₄, PF_{6,} AsF₆, SbF₆, SbCl₆, HSO₄, and ClO₄.

11. A method for coating a substrate comprising:
(I) applying the solventless silicone release coating composition of any claims 1-10 substrate; and
(II) exposing said coating and substrate to ultraviolet radiation in an amount sufficient to cure the coating.

12. The method of Claim 11, wherein said method further comprises (III) adding a pressure sensitive adhesive to the substrate after step (II).
